# EUROPÄISCHE PATENTSCHRIFT

(11) **EP 0 406 674 B1**
(45) Veröffentlichungstag und Bekanntmachung des Hinweises auf die Patenterteilung: **01.12.1993**
(21) Anmeldenummer: 90112181.4
(22) Anmeldetag: 27.06.1990
(51) Int. Cl.: B01J 41/04, B01J 47/02

(54) **Ionenaustauschvorrichtung zur Wasserreinigung, Verfahren zu deren Herstellung und Verwendung derselben zur Nitrat- und/oder Nitritentfernung in Wasser**
Ion exchange device for water treatment, process for its fabrication and its use for removing nitrites and/or nitrates from water
Dispositif échangeur d'ions pour la purification de l'eau, procédé pour sa fabrication et son utilisation pour enlever les nitrites et/ou les nitrates de l'eau

(30) Priorität: 07.07.1989 DE 3922391
(43) Veröffentlichungstag der Anmeldung: 09.01.1991
(73) Patentinhaber: HOELZLE & CHELIUS GMBH, D-63234 Neu-Isenburg (DE)
(72) Erfinder: Affonso, Alvaro, Prof.Dr., D-6380 Bad Homburg (DE)
(74) Vertreter: Lauer, Dieter, Dr.

(56) Entgegenhaltungen:
- EP-A- 0 249 049
- EP-A- 0 291 330
- DE-A- 3 515 299
- DE-U- 8 518 951
- US-A- 4 474 620

## Beschreibung

Die vorliegende Erfindung betrifft eine Ionenaustauschvorrichtung zur Wasserreinigung oder zur Verbesserung der Wasserqualität, vorzugsweise zur Verminderung des Nitrit- und/oder Nitratgehaltes, bestehend aus mindestens einem Austauschbehälter mit einem darin angeordneten basischen Anionenaustauscher in Chlorid- und/oder Sulfatform. Die Erfindung betrifft weiterhin ein Verfahren sowie die Verwendung der Ionenaustauschvorrichtung zur Trinkwassergewinnung. Die Ionenaustauschvorrichtung enthält gemäß der Erfindung mindestens zusätzlich eine gesonderte Anionenaustauscherschicht in Hydroxylform.

Das Problem der Zunahme der Nitrat- und Nitritionenkonzentration im Trinkwasser hat in den letzten Jahren erhebliche Bedeutung erlangt. Da aus Nitraten und Nitriten im menschlichen Körper gefährliche, karzinogene Nitrosamine gebildet werden können, wird in vielen Ländern durch Trinkwassernormen die maximale Nitratkonzentration im Trinkwasser gesetzlich festgeschrieben. Dennoch nimmt der Gehalt an Nitraten in natürlichen Gewässern weiterhin zu, denn Nitrate gelangen in großen Mengen über verschiedene Formen von Schadstoffen in die Oberflächengewässer und das Grundwasser, insbesondere aber durch die Überdüngung landwirtschaftlicher Nutzflächen. In einigen Teilen der Bundesrepublik mußten Trinkwasserbrunnen bereits geschlossen werden, da die Nitratkonzentration die gesetzlich festgeschriebene Grenze von 50 ppm überschreitet.

Aus ernährungsphysiologischer Sicht ist die Aufrechterhaltung des Gehaltes aller Ionen im natürlichen Wasser notwendig. Deshalb muß eine Zunahme solcher Ionen vermieden werden, die in hohen Konzentrationen toxisch wirken. Im Fall der Nitrate gelten z.Z. Konzentrationen von weniger als 10 ppm als harmlos oder sind sogar wünschenswert, jedoch nimmt die Toxizität bei höheren Gehalten erheblich zu und gefährdet insbesondere Kleinkinder.

So sind insbesondere bei Kleinkindern zahlreiche Fälle in der medizinischen Literatur beschrieben worden, bei denen nitratreiches Wasser, beispielsweise als Verdünnungswasser für Säuglingsmilch schwere Schäden bei Säuglingen hervorgerufen hat. Weiterhin sind andere Schädigungen (Schädigungen im Blutbild und dgl.) beobachtet worden. Schließlich ergibt sich der Sachverhalt, daß auch für einige gewerbliche Betriebe Nitrate und/oder Nitrite im Wasser unerwünscht sind.

Unter Berücksichtigung dieses Sachverhaltes sind die verschiedensten Nitratentfernungen bei der Wasseraufbereitung ausgearbeitet worden, so z.B. die biologische Entfernung mit Hilfe von denitrifizierenden Bakterien sowie der Einsatz von Anionenaustauscherharzen, insbesondere mit speziellen funktionellen Gruppen, die nitrationenspezifisch wirken sollen.

Das erste Verfahren ist unbrauchbar zur Herstellung begrenzter Trinkwassermengen für Haushaltszwecke in einfachen Geräten. Das zweite Verfahren hat folgenden Nachteil: Wenn Wasser, das verschiedene Anionen wie Chloride, Sulfate, Nitrate, Carbonate und Phosphate enthält, durch die bekannten Anionenaustauscherharze geleitet wird, so ist die Sorption der einzelnen Anionen entsprechend der Ionenaffinität des Austauscherharzes unterschiedlich stark und man erhält ein Filtrat mit völlig verändertem Gehalt an Anionenkomponenten. Aus ernährungsphysiologischer Sicht und im Hinblick auf die Toxizität wird jetzt im Rahmen der vorliegenden Erfindung nur eine Entfernung bzw. Verminderung des Nitrationengehaltes angestrebt, wobei gleichzeitig die Konzentration der übrigen Anionen im ursprünglichen Wasser weitgehend unverändert bleiben oder nur in einem gewissen Umfang geändert werden soll. Einige bekannte Anionenaustauscherharze, die zwar eine besondere Affinität für Nitrationen besitzen, verändern trotzdem in starkem Maße die Chlorid-, Sulfat- und Carbonat-Konzentrationen.

Basische Anionenaustauscherharze kann man in der Chlorid-, Sulfat- und Hydroxil-Form beziehen. Der Einsatz jedes einzelnen Typs allein führt nicht nur zur Entfernung der Nitrationen sondern auch zu erheblichen Veränderungen der Konzentrationen der übrigen Anionen.

Daher hat man bereits in der DE-OS 3 010 538 ein Verfahren zur Abscheidung von Nitraten aus Wasser unter Verwendung von stark basischen Anionenaustauschern vorgeschlagen, wobei das aufzubereitende Wasser mit einer Schicht stark basischer Anionenaustauscher in Kontakt gebracht wird, deren Funktionsgruppe 50 bis 100 % in die Sulfatform um 0 bis 50 % in die Chloridform und um 0 bis 50 % in die Hydrogencarbonatform überführt wird, so daß entweder der basische Anionenaustauscher in einer 100%igen Sulfatform oder in einer Mischform Sulfat/Chlorid und/oder Hydrogencarbonatform vorliegt.

Nachteilig ist bei diesem Verfahren jedoch, daß die in der "Trinkwasser-Verordnung" festgelegten Grenzwerte für Chloride und Sulfate je nach Durchflußgeschwindigkeit durch die Anionenaustauschermassen im Filtrat erheblich überschritten bzw. unterschritten werden können.

Ziel und Aufgabe der vorliegenden Erfindung war es daher eine verbesserte Ionenaustauschvorrichtung zur Wasserreinigung oder zur Verbesserung der Wasserqualität zu finden sowie ein Verfahren zu deren Herstellung. Insbesondere sollte im Rahmen der vorliegenden Erfindung erzielt werden, daß der Nitrit- und/oder Nitratgehalt des zu reinigenden Wassers herabgesetzt werden kann, ohne daß der Chlorid- und/oder Sulfatgehalt des Wassers wesentlich ansteigt. Weiterhin sollte erzielt werden, daß kleine Wassermengen, z.B. für Haushalte, leicht aufbereitet werden können.

Erfindungsgemäß wurde festgestellt, daß diesen Zielen und Aufgaben eine Ionenaustauschvorrichtung zur Wasserreinigung oder zur Verbesserung der Wasserqualität, vorzugsweise zur Verminderung des Nitrit- und/oder Nitratgehaltes, gerecht wird, bestehend aus mindestens einem Austauschbehälter mit einem darin angeordneten basischen Anionenaustauscher in Chlorid- und/oder Sulfatform. Gemäß der Erfindung enthält die Ionenaustauschvorrichtung mindestens zusätzlich eine basische Anionenaustauscherschicht in Hydroxylform oder als hydroxylgruppenhaltige Schicht, die Anionenaustauscherschichten sind unmittelbar und/oder unter Einschaltung von Zwischenschichten-, Filterschichten oder Anionenaustauschbehältern hintereinander angeordnet und die Anionenaustauscherschicht(en) in Chlorid- und/oder Sulfatform ist bzw. sind nicht als Mischform sondern als gesonderte Schicht(en) angeordnet.

Nach einer bevorzugten Ausführungsform der Erfindung ist in der Ionenaustauschvorrichtung nach der Eintrittsöffnung mindestens eine Filterschicht, vorzugsweise eine Aktivkohleschicht oder aktivkohlehaltige Schicht, angeordnet.

Nach einer weiteren bevorzugten Ausführungsform sind die mindestens zwei hintereinander angeordneten basischen Anionenaustauscherschichten, von denen mindestens eine eine basische Anionenaustauscherschicht in Hydroxylform oder hydroxylgruppenhaltige Anionenaustauscherschicht ist, als getrennte Schichten ohne Vermischung in dem Ionenaustauschbehälter, der vorzugsweise ein zylinderförmiger, kegelstumpfförmiger oder im Querschnitt elliptischer Behälter ist, angeordnet. An oder in der Nähe der Eintrittsöffnung ist eine Aktivkohleschicht oder aktivkohlehaltige Schicht angeordnet, die vorzugsweise einen feinteiligen Kunststoff oder ein feinteiliges Kunstharz enthält. Der Kunststoff wird bevorzugt aus der Gruppe der Polyolefine oder Fluorpolymere ausgewählt.

Durch die erfindungsgemäße Ionenaustauschvorrichtung mit den Anionenaustauscherschichten gelingt es die Bedingungen, die an ein geeignetes Verfahren zur selektiven Nitratentfernung aus Wasser, insbesondere Trinkwasser, gestellt werden müssen zu erfüllen. Durch den Einsatz vorzugsweise einer einfachen Patrone oder einer ähnlichen Ionenaustauschervorrichtung, die die zwei Schichten des basischen Anionenaustauscherharzes unvermischt enthält, ist es möglich die Nitratentfernung auch für Haushalte, für kleinere Gewerbebetriebe, für Brunnenwasser, z.B. in landwirtschaftlichen Betrieben, oder für Haushalte durchzuführen.

Nach einer Ausführungsform ist die erste Anionenaustauscherschicht an oder in der Nähe der Wassereintrittsöffnung oder in Durchtrittsrichtung des Wassers als erste Schicht eine schwach, mittelstark oder stark basische Anionenaustauscherharzschicht in Hydroxylform, vorzugsweise eine schwach basische Anionenaustauscherharzschicht in Hydroxylform, dagegen die in Wasserdurchtrittsrichtung angeordnete zweite Schicht eine stark basische Anionenaustauscherharzschicht in Sulfatform oder in Chloridform, vorzugsweise jedoch Sulfatform.

Nach der bevorzugten Ausführungsform der erfindungsgemäßen Ionenaustauschvorrichtung ist bzw. sind jedoch die chlorid- und/oder sulfationenhaltige Anionenaustauscherschicht(en) oder Anionenaustauscherschicht in Chlorid- oder Sulfatform, die schwach, mittelstark oder stark basisch, vorzugsweise stark basisch sind, in der Ionenaustauschvorrichtung in der Nähe oder unterhalb der Einlaßöffnung, vorzugsweise unterhalb der Filterschicht, und/oder (in Strömungsrichtung des zu reinigenden Wassers) vor der Anionenaustauscherschicht in Hydroxylform oder der hydroxylgruppenhaltigen Anionenaustauscherschicht angeordnet. Die Anionenaustauscherschicht in Hydroxylform ist stark, mittelstark oder schwach basisch, vorzugsweise schwach basisch und/oder in ihrer Schichtdicke gegenüber der Schichtdicke der anderen Anionenaustauscherschichten reduziert.

Mit dieser einfachen, aber bisher unbekannten Anordnung verschiedener Funktionsformen eines basischen Ionenaustauschers, werden sehr gute oder nahezu ideale Ergebnisse erzielt.

Diese erfindungsgemäße Ionenaustauschvorrichtung ist für eine große Breite der zur Trinkwassergewinnung verwendeten Wasser, Brunnenwasser, Leitungswasser und dgl. geeignet. Da in vielen Gegenden das Wasser einen sehr hohen Chloridgehalt hat, ist das in Wasserdurchtrittsrichtung zuerst angeordnete Anionenaustauscherharz vorzugsweise ein Anionenaustauscherharz in Sulfatform. Liegen jedoch starke Sulfatverunreinigungen vor, wird ein Anionenaustauscherharz in Chloridform eingesetzt. Bei sehr stark mit Chlorid- und Sulfationen verunreinigtem Wasser ist es nach einer Ausführungsform möglich, in unterschiedlichen Schichtanordnungen ein Anionenaustauscherharz in Chloridform und ein Anionenaustauscherharz in Sulfatform einer oder mehreren separaten Schichten dem basischen Anionenaustauscherharz in Hydroxilform vorzuschalten.

Nach einer bevorzugten Ausführungsform ist die in der Ionenaustauschvorrichtung angeordnete Anionenaustauscherschicht in Hydroxylform schwach basisch. Dadurch gelingt es, daß der pH-Wert des Wassers kaum oder nur in einem sehr geringen Bereich geändert wird.

Nach einer weiteren bevorzugten Ausführungsform enthält die schwach basische Anionenaustauscherschicht in Hydroxylform oder die schwach basische hydroxylgruppenhaltige Anionenaustauscherschicht zu mehr als 50 %, vorzugsweise mehr als 65 %, tertiäre Aminogruppen und/oder Hydroxyl- und Chloridgruppen (OH/CL). Diese Anionenaustauscherharze haben im Rahmen der Erfindung hinsichtlich der selektiven Entfernung der Nitrat- und/oder Nitritionen sehr gute Ergebnisse erbracht.

Nach einer anderen bevorzugten Ausführungsform der Erfindung ist die Anionenaustauscherschicht in Hydroxylform schwach, mittelstark oder stark basisch, wobei jedoch das Volumen und/oder Gewichtsverhältnis der mittelstark oder stark basischen Anionenaustauscherschicht in Hydroxylform zu der oder den anderen stark basischen Anionenaustauscherschicht(en) in Chlorid und/oder Sulfatform 0,05 : 1 bis 0,8 : 1, vorzugsweise 0,1 : 1 bis 0,6 : 1 beträgt.

Nach einer anderen bevorzugten Ausführungsform beträgt das Volumenverhältnis und/oder Gewichtsverhältnis bei Verwendung von schwach bis mittelstark basischen Anionenaustauscherschicht(en) in Hydroxylform zu stark basischen Anionenaustauscherschicht(en) in Chlorid- und/oder Sulfatform 0,3 : 1 bis 0,9 : 1, vorzugsweise 0,4 : 1 bis 0,7 : 1.

Nach einer bevorzugten Ausführungsform der Erfindung weist die Ionenaustauschvorrichtung vorzugsweise der zylinderförmige oder zylinderähnliche Ionenaustauschbehälter, ein Gewinde, eine Ansatz- oder Aufsatzvorrichtung oder ähnliche Befestigung-, Halte- oder Einsatzvorrichtung auf und besitzt einen Durchmesser von 0,5 bis 25 cm, vorzugsweise 0,7 bis 18 cm, sowie eine Höhe (oder Länge) von 4 bis 25 cm, vorzugsweise 5 bis 20 cm, wobei vorzugsweise die Höhe (bzw. Länge) der Vorrichtung größer ist als der Radius oder mittlere Durchmesser. Besonders bevorzugt werden Patronen oder ähnliche zylinderförmige Ionenaustauschbehälter mit einem Durchmesser von 1 cm bis 8 cm, vorzugsweise 1,5 bis 6 cm und einer Länge, die mehr als 2,5 mal, vorzugsweise mehr als 3 mal, so groß ist wie der Patronenradius. Besonders bevorzugt beträgt die Länge der Patronen 2,5 bis 20 cm, vorzugsweise 4 bis 12 cm. Die letztgenannten Größen stellen Klein-Ionenaustauschgeräte für kleinere Wassermengen dar.

Nach einer bevorzugten Ausführungsform weist der feinteilige Kunststoff, der in der Filterschicht, vorzugsweise Aktivkohleschicht enthalten ist, einen mittleren Teilchendurchmesser von 0,01 bis 100 µm, vorzugsweise 0,1 bis 30 µm, auf.

Die vorliegende Erfindung betrifft weiterhin ein Verfahren zur Herstellung der Ionenaustauschvorrichtung zur Wasserreinigung oder zur Verbesserung der Wasserqualität, vorzugsweise zur Verminderung des Nitrit- und/oder Nitratgehaltes, bestehend aus mindestens einem Austauschbehälter mit einem darin enthaltenen basischen Anionenaustauscher in Chlorid- und/oder Sulfatform. Gemäß der Erfindung wird in den Ionenaustauschbehälter, der vorzugsweise ein zylinderförmiger, kegelstumpfförmiger oder im Querschnitt elliptischer Behälter ist, zusätzlich eine basische Anionenaustauscherschicht in Hydroxylform oder als hydroxylgruppenhaltige Schicht eingebracht, die Anionenaustauscherschichten werden unmittelbar unter Vermeidung von Schichtvermischungen und/oder unter Einschaltung von Zwischenschichten-, Filterschichten oder Anionenaustauschbehältern zur Vermeidung von Schichtvermischungen hintereinander angeordnet, so daß die Anionenaustauscherschicht(en) in Chlorid- und/oder Sulfatform nicht als Mischform sondern als gesonderte Schicht(en) angeordnet wird bzw. werden.

Nach einer bevorzugten Ausführungsform des erfindungsgemäßen Verfahrens wird, bezogen auf die Strömungsrichtung des zu reinigenden Wassers, zuerst an oder in der Nähe der Eintrittsöffnung eine Aktivkohleschicht oder aktivkohlehaltige Schicht, vorzugsweise eine feinteiligen Kunststoff enthaltende Aktivkohleschicht, danach unmittelbar oder unter Einschaltung von Zwischenschichten, Filterschichten oder Anionenaustauscherbehälter die chlorid- und/oder sulfationenhaltige Anionenaustauscherschicht(en) oder Anionenaustauscherschicht in Chlorid- und/oder Sulfatform, danach unmittelbar oder unter Einschaltung von Zwischenschichten, Filterschichten oder Anionenaustauschbehälter die Anionenaustauscherschicht in Hydroxylform oder die hydroxylgruppenhaltige Anionenaustauscherschicht eingebracht, wobei die Einbringung der Schichten vorzugsweise in dieser oder in entgegengesetzter Reihenfolge durchgeführt wird.

Bei der Befüllung der Ionenaustauschvorrichtung wird bevorzugt mindestens eine Anionenaustauschermasse, vorzugsweise die basische hydroxylgruppenhaltige Anionenaustauschermasse und/oder die basische sulfatgruppenhaltige Anionenaustauschermasse, im angefeuchteten Zustand oder im feuchten Zustand in den Ionenaustauschbehälter separat schichtbildend eingebracht oder mindestens eine Anionenaustauschermasse nach der separaten schichtförmigen Einbringung befeuchtet. Nachfolgend wird bzw. werden die andere oder anderen Anionenaustauschermasse(n) separat schichtbildend eingebracht.

Nach einer bevorzugten Ausführungsform besteht die Ionenaustauschvorrichtung aus mindestens zwei Ionenaustauscherbehältern, die hintereinander geschaltet sind bzw. werden. Bevorzugt wird in die (bezogen auf die Strömungsrichtung des zu reinigenden Wassers) letzte Anionenaustauschvorrichtungen die basische Anionenaustauscherschichten in Hydroxylform oder die basische hydroxylgruppenhaltige Anionenaustauscherschicht eingebracht, während in mindestens eine in der Reihe vorgeschaltete Anionenaustauschervorrichtung, vorzugsweise in mindestens eine unmittelbar vorgeschaltete Anionenaustauschervorrichtung die basische Anionenaustauschermasse in Chlorid- und/oder Sulfatform in Form mindestens einer separaten Schicht angeordnet. Bei der Verwendung mehrerer hintereinander geschalteter Ionenaustauschbehälter sind diese vorzugsweise so geformt, daß sie ineinander gesteckt, übereinander geschraubt, gesteckt oder angebracht werden können, vorzugsweise durch konische Verjüngung der zylinderähnlichen Austritts- oder Eintrittsöffnung, durch konische Erweiterung oder Ausformung der zylinderähnlichen Eintritts- oder Austrittsöffnung oder durch Anbringung, Ausformung oder Befestigung von Verbindungselementen, Gewinden, Steckvorrichtungen und dgl.

Die Anfeuchtung oder Befeuchtung der Anionenaustauschermasse vor Einfüllung in den Ionenaustauschbehälter wird mit einer keimfreien oder destillierten und/oder sterilisierten Flüssigkeit, vorzugsweise mit keimfreien oder destilliertem Wasser durchgeführt.

Die Regeneration der Anionenaustauschermasse in Hydroxylform oder der hydroxylgruppenhaltigen Anionenaustauscherschicht oder -behälter wird bevorzugt separat zu der Regeneration der basischen Anionenaustauscherschichten oder -behälter in Chlorid- und/oder Sulfatform durchgeführt, wobei die nitrit- und/oder nitrathaltige Regenerationslösung durch chemische oder elektrolytische Verfahren, vorzugsweise durch Oxydation zu Stickstoff, vom Nitrit und/oder Nitrat befreit und wiederverwendet wird.

Die Erfindung betrifft weiterhin die Verwendung der Ionenaustauschvorrichtung in Form von aufsetzbaren, anschraubbaren, aufsteckbaren oder in anderer Form befestigbaren Patronen oder ähnlicher zylinderförmiger, kegelstumpfförmige oder im Querschnitt elliptischen Behälters, enthaltend mindestens eine chlorid- und/oder sulfationenhaltige Anionenaustauscherschicht oder Anionenaustauscherschicht in Chlorid- oder Sulfatform schichtförmig angeordnet in der Ionenaustauschvorrichtung in der Nähe oder unterhalb der Einlaßöffnung, vorzugsweise unterhalb einer Filterschicht, und/oder (in Strömungsrichtung des zu reinigenden Wassers) vor einer Anionenaustauscherschicht in Hydroxylform oder einer hydroxylgruppenhaltigen Anionenaustauscherschicht, zur Nitrat- und/oder Nitritentfernung oder -verminderung in Wasser zur Trinkwassergewinnung.

Die Vorrichtung kann gemäß der bereits genannten Ausführungsform auch so ausgestattet werden, daß eine Reakivierung des Ionenaustauscherharzes sowohl in Hydroxyl-Form als auch in Sulfat-Form oder Chloridform möglich ist. Es können dann erheblich größere Wassermengen behandelt werden.

Um größere Mengen an Trinkwasser mit der erfindungsgemäßen Vorrichtung herstellen zu können, ist ein System zur Regeneration der Hydroxyl- und der Sulfat-Form des basischen Anionenaustauscherharzes zweckmäßig. Die einzusetzende Patrone ist preiswert und einfach zu handhaben, so daß es möglich ist, nacheinander beide Ionenaustauscherharzschichten in dasselbe Patronengehäuse einzufüllen. Soweit die Patrone nur zum einmaligen Gebrauch bestimmt ist, ist das Problem des Bakterienwachstums auf dem nitratgesättigten Ionenaustauscherharzes kein Problem. Im Falle größerer Systeme kann eine Regenerierung der Hydroxyl-Form des Harzes mit Natriumhydroxidlösungen vorgenommen werden und die der Sulfat-Form mit Natriumsulfatlösungen. Die verbrauchten Regenerationslösungen können wiederverwendet werden, wenn sie von den Verunreinigungen und von dem eliminierten Nitrat befreit werden. Hierbei sind die elektrochemischen Reduktion zu Stickstoffgas oder katalytische Reduktion die geeigneten Mittel.

Eine bevorzugte Ausführungsform des erfindungsgemäßen Verfahrens und der erfindungsgemäßen Vorrichtung wird durch die nachfolgenden Ausführungen und Abbildung erläutert:

Bild 1 zeigt den Aufbau der aus Patrone und zusätzlichem Filter bestehenden Einheit für die Herstellung von täglich 5 - 10 Litern Trinkwassers, eine Menge, die z. B. für die Zubereitung der Nahrung für ein Kleinkind ausreichend ist. Zusammen mit einer Ausstattung von halbquantitativen Nitrat/Nitrit-Teststreifen ist eine absolut zuverlässige und einfache Herstellung von Trinkwasser möglich, das für Säuglingsnahrung ausgezeichnet geeignet ist. Auch kann die erfindungsgemäße Anordnung dazu dienen, stark mit Nitrat verunreinigtes Trinkwasser, wie es mittlerweile in vielen Gebieten vorkommt, auf einfache und sichere Weise mit den entsprechenden Vorteilen gegenüber bekannten Verfahren zu denitrifizieren.

### Bild 1

A) Oberer Behälter für das zu behandelnde Wasser
B) Öffnung mit dem Anschlußstück für die einzufügende Patrone
C) Unterer Container für das behandelte Wasser
D) Tülle
E) Patrone
F) Schicht aus Aktivkohle und pulverförmigen Polyamid
G) Schicht aus stark basischem Anionenaustauscherharz in Sulfat-Form
H) Schicht aus schwach basischem Anionenaustauscherharz in Hydroxyl-Form
I) Haltering
J) Filterscheibe aus weitporiger Acetatfolie
K) Haltering
L) Auslaß-Öffnung

Die Vorrichtung ist einfach und preiswert. Als Beispiel sind die Werte für eine Patrone angegeben, die zur Behandlung von 5 bis 10 Litern Brunnenwasser mit einem Gehalt von 110 ppm Nitrat bestimmt ist:
1. Menge an Harz in Hydroxylform = 5 ml
2. Menge an Harz in Sulfatform = 7 ml
3. Durchmesser der Patrone 2 cm, Länge 5 cm
4. Durchflußrate = 1 Liter in 10 Minuten
5. Reduzierung der Nitratkonzentration 98 %
6. Ansteigen der Sulfatkonzentration 8 %
7. Verminderung der Chloridkonzentration 2 %
8. Die Gesamthärte wird kaum vermindert. Mit der gleichen Patrone können auch 5 bis 10 Liter Wasser behandelt werden.
9. Nitrite, chlorierte Kohlenwasserstoffe und Pestizide werden ebenfalls reduziert.

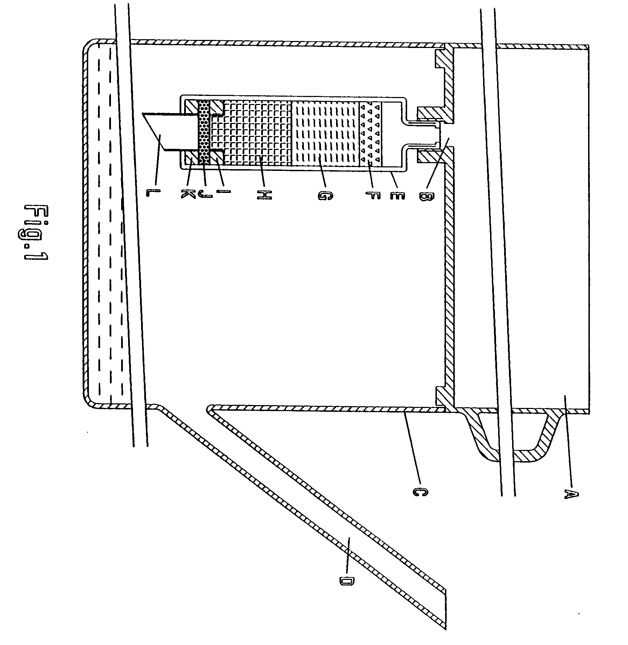

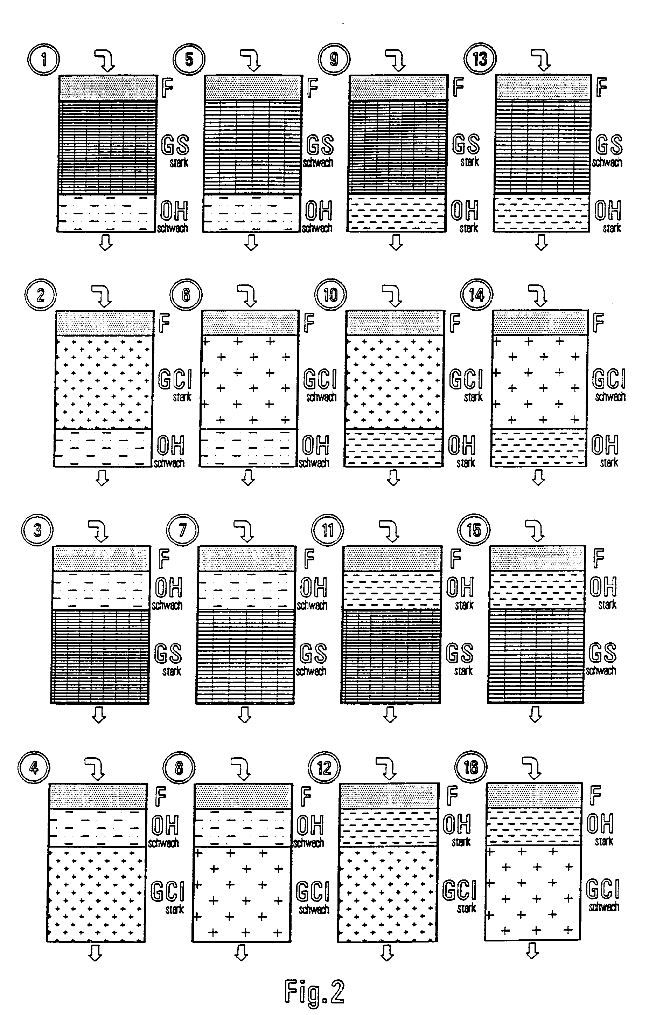

In Figur 2 sind einige Ausführungsbeispiele der erfindungsgemäßen Anionenaustauschervorrichtung zur Trinkwasserreinigung schematisch dargestellt, wobei die Schichtdickenverhältnisse in den Darstellungen nicht unter Einhaltung der zu wählenden Schichtdikke exakt wiedergegeben sind.

Unter GS ist die basische Anionenaustauscherschicht in Sulfatform, unter GCl die basische Anionenaustauscherschicht in Chloridform wiedergegeben, wobei angegeben ist, ob die Anionenaustauscherschichten stark basisch (stark) oder schwach basisch ( schwach) sind. Unter OH ist die basische Anionenaustauscherschicht in Hydroxylform und unter F die Aktivkohleschicht wiedergegeben.

Die Anionenaustauscher gemäß den Anordnungen 3, 4, 7, 8, 11, 12, 15 und 16 sind für Sonderfälle einsetzbar, bevorzugt sind jedoch die Anionenaustauscher gemäß den Anordnungen 1, 2, 5, 6, 9, 10, 13 und 14.

## Patentansprüche

1. Ionenaustauschvorrichtung zur Wasserreinigung oder zur Verbesserung der Wasserqualität, vorzugsweise zur Verminderung des Nitrit- und/oder Nitratgehaltes, bestehend aus mindestens einem Austauschbehälter mit einem darin angeordneten basischen Anionenaustauscher in Chlorid- und/oder Sulfatform, dadurch gekennzeichnet, daß die Ionenaustauschvorrichtung mindestens zusätzlich eine basische Anionenaustauscherschicht in Hydroxylform oder als hydroxylgruppenhaltige Schicht enthält, die Anionenaustauscherschichten unmittelbar und/oder unter Einschaltung von Zwischenschichten-, Filterschichten oder Anionenaustauschbehältern hintereinander angeordnet und die Anionenaustauscherschicht(en) in Chlorid- und/oder Sulfatform nicht als Mischform sondern als gesonderte Schicht(en) angeordnet ist bzw. sind.

2. Ionenaustauschvorrichtung nach Anspruch 1, dadurch gekennzeichnet, daß in der Ionenaustauschvorrichtung nach der Eintrittsöffnung eine Filterschicht, vorzugsweise eine Aktivkohleschicht oder aktivkohlehaltige Schicht, angeordnet ist.

3. Ionenaustauschvorrichtung nach Ansprüchen 1 und 2, dadurch gekennzeichnet, daß die mindestens zwei hintereinander angeordneten basischen Anionenaustauscherschichten, von denen mindestens eine eine basische Anionenaustauscherschicht in Hydroxylform oder eine hydroxylgruppenhaltige Anionenaustauscherschicht ist, als getrennte Schichten ohne Vermischung in dem Ionenaustauschbehälter, der vorzugsweise ein zylinderförmiger, kegelstumpfförmiger oder im Querschnitt elliptischer Behälter ist, angeordnet sind, daß an oder in der Nähe der Eintrittsöffnung eine Aktivkohleschicht oder aktivkohlehaltige Schicht angeordnet ist, die einen feinteiligen Kunststoff, vorzugsweise ausgewählt aus der Gruppe der Polyolefine oder Fluorpolymere, enthält.

4. Ionenaustauschvorrichtung nach einem oder mehreren der Ansprüche 1 bis 3, dadurch gekennzeichnet, daß die chlorid- und/oder sulfationenhaltige Anionenaustauscherschicht(en) oder Anionenaustauscherschicht in Chlorid- oder Sulfatform in der Ionenaustauschvorrichtung in der Nähe oder unterhalb der Einlaßöffnung, vorzugsweise unterhalb der Filterschicht und/oder (in Strömungsrichtung des zu reinigenden Wassers) vor der Anionenaustauscherschicht in Hydroxylform oder der hydroxylgruppenhaltigen Anionenaustauscherschicht angeordnet ist bzw. sind.

5. Ionenaustauschvorrichtung nach einem oder mehreren der Ansprüche 1 bis 4, dadurch gekennzeichnet, daß die in der Ionenaustauschvorrichtung angeordnete Anionenaustauscherschicht in Hydroxylform schwach basisch ist.

6. Ionenaustauschvorrichtung nach einem oder mehreren der Ansprüche 1 bis 4, dadurch gekennzeichnet, daß die schwach basische Anionenaustauscherschicht in Hydroxylform oder die schwach basische hydroxylgruppenhaltige Anionenaustauscherschicht
a) zu mehr als 50 %, vorzugsweise
mehr als 65 %,
tertiäre Aminogruppen enthält und/oder
b) Hydroxyl- und Chloridgruppen (OH/CL) gemischt enthält.

7. Ionenaustauschvorrichtung nach einem oder mehreren der Ansprüche 1 bis 6, dadurch gekennzeichnet, daß die Anionenaustauscherschicht in Hydroxylform schwach, mittelstark oder stark basisch ist, wobei jedoch das Volumen- und/oder Gewichtsverhältnis der mittelstark oder stark basischen Anionenaustauscherschicht in Hydroxylform zu der oder den anderen stark basischen Anionenaustauscherschicht(en) in Chlorid- und/oder Sulfatform
0,05 : 1 bis 0,8 : 1, vorzugsweise
0,1 : 1 bis 0,6 : 1,
ist oder das Volumenverhältnis und/oder Gewichtsverhältnis beträgt bei Verwendung von schwach basischen Anionenaustauscherschicht(en) in Hydroxylform zu stark basischen Anionenaustauscherschicht(en) in Chlorid- und/oder Sulfatform
0,3 : 1 bis 0,9 : 1, vorzugsweise
0,4 : 1 bis 0,7 : 1.

8. Ionenaustauschvorrichtung nach einem oder mehreren der Ansprüche 1 bis 7, dadurch gekennzeichnet, daß der zylinderförmige oder zylinderähnliche Ionenaustauschbehälter ein Gewinde, eine Ansatz- oder Aufsatzvorrichtung oder ähnliche Befestigung-, Halte- oder Einsatzvorrichtung aufweist und einen Durchmesser von
0,5 bis 25 cm, vorzugsweise
0,7 bis 18 cm,
sowie eine Höhe (oder Länge) von
4 bis 25 cm, vorzugsweise
5 bis 20 cm,
besitzt, wobei vorzugsweise die Höhe (bzw. Länge) der Vorrichtung größer ist als der Radius oder mittlere Durchmesser.

9. Ionenaustauschvorrichtung nach einem oder mehreren der Ansprüche 1 bis 8, dadurch gekennzeichnet, daß der feinteilige Kunststoff einen mittleren Teilchendurchmesser von
0,01 bis 100 µm, vorzugsweise
0,1 bis 30 µm,
aufweist.

10. Verfahren zur Herstellung der Ionenaustauschvorrichtung zur Wasserreinigung oder zur Verbesserung der Wasserqualität, vorzugsweise zur Verminderung des Nitrit- und/oder Nitratgehaltes, bestehend aus mindestens einem Austauschbehälter mit einem darin enthaltenen basischen Anionenaustauscher in Chlorid- und/oder Sulfatform, dadurch gekennzeichnet, daß in den Ionenaustauschbehälter, der vorzugsweise ein zylinderförmiger, kegelstumpfförmiger oder im Querschnitt elliptischer Behälter ist, zusätzlich eine basische Anionenaustauscherschicht in Hydroxylform oder als hydroxylgruppenhaltige Schicht eingebracht wird, die Anionenaustauscherschichten unmittelbar unter Vermeidung von Schichtvermischungen und/oder unter Einschaltung von Zwischenschichten-, Filterschichten oder Anionenaustauschbehältern zur Vermeidung von Schichtvermischungen hintereinander angeordnet und die Anionenaustauscherschicht(en) in Chlorid- und/oder Sulfatform nicht als Mischform sondern als gesonderte Schicht(en) angeordnet werden.

11. Verfahren nach Anspruch 10, dadurch gekennzeichnet, daß bezogen auf die Strömungsrichtung des zu reinigenden Wassers zuerst an oder in der Nähe der Eintrittsöffnung eine Aktivkohleschicht oder aktivkohlehaltige Schicht, vorzugsweise eine feinteilige Kunststoff enthaltende Aktivkohleschicht, danach unmittelbar oder unter Einschaltung von Zwischenschichten, Filterschichten oder Anionenaustauscherbehälter die chlorid- und/oder sulfationenhaltige Anionenaustauscherschicht(en) oder Anionenaustauscherschicht in Chlorid und/oder Sulfatform, danach unmittelbar oder unter Einschaltung von Zwischenschichten, Filterschichten oder Anionenaustauschbehälter die Anionenaustauscherschicht in Hydroxylform oder die hydroxylgruppenhaltige Anionenaustauscherschicht eingebracht wird, wobei die Einbringung der Schichten vorzugsweise in dieser oder in entgegengesetzter Reihenfolge durchgeführt wird.

12. Verfahren nach Ansprüchen 10 und 11, dadurch gekennzeichnet, daß mindestens eine Anionenaustauschermasse, vorzugsweise die basische hydroxylgruppenhaltige Anionenaustauschermasse und/oder die basische sulfatgruppenhaltige Anionenaustauschermasse, im angefeuchteten Zustand oder im feuchten Zustand in den Ionenaustauschbehälter separat schichtbildend eingebracht oder mindestens eine Anionenaustauschermasse nach der separaten schichtförmigen Einbringung befeuchtet wird und nachfolgend die andere oder anderen Anionenaustauschermassen separat schichtbildend eingebracht werden.

13. Verfahren nach einem oder mehreren der Ansprüche 10 bis 12, dadurch gekennzeichnet, daß die Ionenaustauschvorrichtung aus mindestens zwei Ionenaustauscherbehältern besteht, die hintereinander geschaltet werden und in die (bezogen auf die Strömungsrichtung des zu reinigenden Wassers) letzte Anionenaustauschvorrichtungen die basische Anionenaustauscherschichten in Hydroxylform oder die basische hydroxylgruppenhaltige Anionenaustauscherschicht eingebracht wird, während in mindestens eine in der Reihe vorgeschaltete Anionenaustauschervorrichtung, vorzugsweise in mindestens eine unmittelbar vorgeschaltete Anionenaustauschervorrichtung die basische Anionenaustauschermasse in Chlorid- und/oder Sulfatform angeordnet wird.

14. Verfahren nach einem oder mehreren der Ansprüche 10 bis 13, dadurch gekennzeichnet, daß die Anfeuchtung oder Befeuchtung der Anionenaustauschermasse vor Einfüllung in den Ionenaustauschbehälter mit einer keimfreien oder destillierten und/oder sterilisierten Flüssigkeit, vorzugsweise mit keimfreien oder destilliertem Wasser durchgeführt wird.

15. Verfahren nach einem oder mehreren der Ansprüche 10 bis 14, dadurch gekennzeichnet, daß die Regeneration der Anionenaustauschermasse in Hydroxylform oder der hydroxylgruppenhaltigen Anionenaustauscherschicht oder -behälter separat zu der Regeneration der basischen Anionenaustauscherschichten oder -behälter in Chlorid- und/oder Sulfatform erfolgt, wobei die nitrit- und/oder nitrathaltige Regenerationslösung auf chemischem oder elektrolytischem Wege, vorzugsweise durch Oxydation zu Stickstoff vom Nitrit und/oder Nitrat befreit und wiederverwendet wird.

16. Verwendung der Ionenaustauschvorrichtung nach einem oder mehreren der Ansprüche 1 bis 15 in Form von aufsetzbaren, anschraubbaren, aufsteckbaren oder in anderer Form befestigbaren Patronen oder ähnlicher zylinderförmiger, kegelstumpfförmiger oder im Querschnitt elliptischer Behälter, enthaltend mindestens eine chlorid- und/oder sulfationenhaltige Anionenaustauscherschicht oder Anionenaustauscherschicht in Chlorid- oder Sulfatform schichtförmig angeordnet in der Ionenaustauschvorrichtung in der Nähe oder unterhalb der Einlaßöffnung, vorzugsweise unterhalb einer Filterschicht und/oder (in Strömungsrichtung des zu reinigenden Wassers) vor einer Anionenaustauscherschicht in Hydroxylform oder einer hydroxylgruppenhaltigen Anionenaustauscherschicht zur Nitrat- und/oder Nitritentfernung oder -verminderung in Wasser zur Trinkwassergewinnung.

## Claims

1. An ion-exchange apparatus for purifying water or for improving the water quality, preferably for reducing the nitrite and/or nitrate content, consisting of at least one exchanger vessel having a basic anion-exchanger in chloride and/or sulphate form located therein, characterised in that the ion exchange apparatus contains at least additionally one basic anion-exchanger layer in hydroxyl form or as a layer containing hydroxyl groups, the anion-exchanger layers are arranged in series directly and/or with the interposition of intermediate layers, filter layers or anion-exchanger vessels and the anion-exchanger layer(s) in chloride and/or sulphate form is or are not arranged as a mixed form but as separate layer(s).

2. An ion-exchange apparatus according to Claim 1, characterised in that a filter layer, preferably an activated carbon layer or layer containing activated carbon, is located in the ion-exchange apparatus after the entry opening.

3. An ion-exchange apparatus according to Claims 1 and 2, characterised in that the at least two basic anion-exchanger layers arranged in series, at least one of which is a basic anion-exchanger layer in hydroxyl form or an anion-exchanger layer containing hydroxyl groups, are arranged as separate layers without mixing in the ion-exchange vessel, which is preferably a vessel which is cylindrical, in the shape of a truncated cone or is elliptical in cross-section, that an activated carbon layer or layer containing activated carbon is located at or in the vicinity of the entry opening, which layer contains a finely divided plastics material, preferably selected from the group of polyolefins or fluoropolymers.

4. An ion-exchange apparatus according to one or more of Claims 1 to 3, characterised in that the anion-exchanger layer(s) containing chloride and/or sulphate ions or anion-exchanger layer in chloride or sulphate form is or are located in the ion-exchange apparatus in the vicinity of or beneath the entry opening, preferably beneath the filter layer and/or (in the direction of flow of the water which is to be purified) before the anion-exchanger layer in hydroxyl form or the anion-exchanger layer which contains hydroxyl groups.

5. An ion-exchange apparatus according to one or more of Claims 1 to 4, characterised in that the anion-exchanger layer in hydroxyl form which is located in the ion-exchange apparatus is weakly basic.

6. An ion-exchange apparatus according to one or more of Claims 1 to 4, characterised in that the weakly basic anion-exchanger layer in hydroxyl form or the weakly basic anion-exchanger layer containing hydroxyl groups contains
a) more than 50%, preferably
more than 65%,
tertiary amino groups and/or
b) hydroxyl and chloride groups (OH/CL) mixed.

7. An ion-exchange apparatus according to one or more of Claims 1 to 6, characterised in that the anion-exchanger layer in hydroxyl form is weakly, medium-strongly or strongly basic, but the volume ratio and/or weight ratio of the medium-strongly or strongly basic anion-exchanger layer in hydroxyl form to the or to the other strongly basic anion-exchanger layer(s) in chloride and/or sulphate form is
0.05 : 1 to 0.8 : 1, preferably
0.1 : 1 to 0.6 : 1,
or the volume ratio and/or weight ratio when using weakly basic anion-exchanger layer(s) in hydroxyl form to strongly basic anion-exchanger layer(s) in chloride and/or sulphate form is
0.3 : 1 to 0.9 : 1, preferably
0.4 : 1 to 0.7 : 1.

8. An ion-exchange apparatus according to one or more of Claims 1 to 7, characterised in that the cylindrical or cylinder-like ion-exchange vessel has a thread, an adjoining device or top attachment device or similar attachment, holding or insertion device and has a diameter of
0.5 to 25 cm, preferably
0.7 to 18 cm,
and a height (or length) of
4 to 25 cm, preferably
5 to 20 cm,
preferably the height (or length) of the device being greater than the radius or mean diameter.

9. An ion-exchange apparatus according to one or more of Claims 1 to 8, characterised in that the finely-divided plastics material has a mean particle diameter of
0.01 to 100 µm, preferably
0.1 to 30 µm.

10. A process for producing the ion-exchange apparatus for purifying water or for improving the water quality, preferably for reducing the nitrite and/or nitrate content, consisting of at least one exchanger vessel with a basic anion-exchanger in chloride and/or sulphate form contained therein, characterised in that additionally a basic anion-exchanger layer in hydroxyl form or as a layer containing hydroxyl groups is additionally introduced into the ion-exchange vessel, which is preferably a vessel which is cylindrical, in the shape of a truncated cone or is elliptical in cross-section, the anion-exchanger layers are arranged in series directly, avoiding mixing of layers, and/or with the interposition of intermediate layers, filter layers or anion-exchanger vessels in order to avoid mixing of layers and the anion-exchanger layer(s) in chloride and/or sulphate form are not arranged as a mixed form but as separate layers(s).

11. A process according to Claim 10, characterised in that, relative to the direction of flow of the water to be purified, first of all an activated carbon layer or layer containing activated carbon, preferably a finely-divided activated carbon layer containing plastics material is located at or in the vicinity of the entry opening, then the anion-exchanger layer(s) containing chloride and/or sulphate ions or anion-exchanger layer in chloride and/or sulphate form is introduced directly or with the interposition of intermediate layers, filter layers or anion-exchanger vessels, then the anion-exchanger layer in hydroxyl form or the anion-exchanger layer containing hydroxyl groups is introduced directly or with the interposition of intermediate layers, filter layers or anion-exchanger vessels, the introduction of the layers preferably being in this sequence or in the opposite sequence.

12. A process according to Claims 10 and 11, characterised in that at least one anion-exchanger medium, preferably the basic anion-exchanger medium containing hydroxyl groups and/or the basic anion-exchanger medium containing sulphate groups, in the moistened state or in the wet state is introduced into the ion-exchange vessel separately, forming a layer, or at least one anion-exchanger medium is wetted after the separate layer-like introduction and subsequently the other anion-exchanger medium or media are introduced separately, forming a layer.

13. A process according to one or more of Claims 10 to 12, characterised in that the ion-exchange apparatus consists of at least two ion-exchange vessels which are connected in series and the basic anion-exchanger layers in hydroxyl form or the basic anion-exchanger layer containing hydroxyl groups is introduced into the last anion-exchanger apparatus (relative to the direction of flow of the water to be purified), whereas the basic anion-exchanger medium in chloride and/or sulphate form is located in at least one preceding anion-exchanger apparatus in the sequence, preferably in at least one directly preceding anion-exchanger apparatus.

14. A process according to one or more of Claims 10 to 13, characterised in that the moistening or wetting of the anion-exchanger medium is performed before pouring into the ion-exchange vessel with a germ-free or distilled and/or sterilised liquid, preferably with germ-free or distilled water.

15. A process according to one or more of Claims 10 to 14, characterised in that the regeneration of the anion-exchanger medium in hydroxyl form or of the anion-exchanger layer or vessel containing hydroxyl groups takes place separately from the regeneration of the basic anion-exchanger layers or vessels in chloride and/or sulphate form, the nitrite-containing and/or nitrate-containing regeneration solution being freed of nitrite and/or nitrate chemically or electrolytically, preferably by oxidation to nitrogen, and is re-used.

16. The use of the ion-exchange apparatus according to one or more of Claims 1 to 15 in the form of cartridges or similar vessels which are cylindrical, in the shape of a truncated cone or elliptical in cross-section, which can be placed on, screwed on, plugged on or which can be attached in another form, containing at least one anion-exchanger layer containing chloride and/or sulphate ions or anion-exchanger layer in chloride or sulphate form arranged in layers in the ion-exchange apparatus in the vicinity of or beneath the inlet opening, preferably beneath a filter layer and/or (in the direction of flow of the water to be purified) before an anion-exchanger layer in hydroxyl form or an anion-exchanger layer containing hydroxyl groups for the removal or reduction of nitrate and/or nitrite in water in order to obtain drinking water.

## Revendications

1. Dispositif échangeur d'ions pour l'épuration de l'eau ou l'amélioration de la qualité de l'eau, de préférence pour la réduction de la teneur en nitrite et/ou en nitrate, constitué par au moins un bac d'échange dans lequel se trouve placé un échangeur d'anions basique sous la forme chlorure et/ou sulfate, caractérisé en ce que le dispositif échangeur d'ions renferme en outre au moins une couche d'échangeur d'anions basique sous la forme hydroxyle ou en tant que couche porteuse de groupes hydroxyles, que les couches d'échangeur d'anions sont montées en série directement et/ou avec intercalation de couches intermédiaires, de couches filtrantes ou de bacs échangeurs d'anions et que la ou les couches d'échangeur d'anions sous la forme chlorure et/ou sulfate n'est ou ne sont pas disposées sous forme de mélange mais sous forme d'une ou de couches séparées.

2. Dispositif échangeur d'ions selon la revendication 2, caractérisé en ce que dans le dispositif échangeur d'ions, une couche filtrante, de préférence une couche de charbon actif ou une couche contenant du charbon actif est placée après l'orifice d'admission.

3. Dispositif échangeur d'ions selon les revendications 1 et 2, caractérisé en ce qu'au moins les deux couches d'échangeur d'anions basiques montées en série, dont au moins une est une couche d'échangeur d'anions basique sous la forme hydroxyle ou une couche d'échangeur d'anions porteuse de groupes hydroxyles, sont disposées, sans être mélangées, sous forme de couches séparées dans le bac échangeur d'ions qui est de préférence un bac cylindrique, tronconique ou de section elliptique, qu'une couche de charbon actif ou une couche contenant du charbon actif renfermant une matière synthétique en particules fines choisie de préférence dans le groupe des polyoléfines ou des polymères fluorés est disposée à l'orifice ou à proximité de l'orifice d'admission.

4. Dispositif échangeur d'ions selon une ou plusieurs des revendications 1 à 3, caractérisé en ce que la ou les couches d'échangeur d'anions contenant des ions chlorure et/ou sulfate ou la couche d'échangeur d'anions sous la forme chlorure ou sulfate dans le dispositif échangeur d'ions est ou sont disposées au voisinage ou au-dessous de l'orifice d'admission, de préférence au-dessous ae la couche filtrante et/ou (dans le sens d'écoulement de l'eau à epurer) avant la couche d'échangeur d'anions sous la forme hydroxyle ou de la couche d'échanqeur d'anions porteuse de groupes hydroxyles.

5. Dispositif échangeur d'ions selon une ou plusieurs des revendications 1 à 4, caractérisé en ce que la couche d'échangeur d'anions sous la forme hydroxyle placée dans le dispositif échangeur d'ions est faiblement basique.

6. Dispositif échangeur d'ions selon une ou plusieurs des revendications 1 à 4, caractérisé en ce que la couche d'échangeur d'anions faiblement basique sous la forme hydroxyle ou la couche d'échangeur d'anions porteuse de groupes hydroxyles faiblement basique contient
a) pour plus de 50%, de préférence pour plus de 65%, des groupes amino tertiaires et/ou
b) contient des groupes hydroxyle et chlorure (OH/Cl) en mélange.

7. Dispositif échangeur d'ions selon une ou plusieurs des revendications 1 à 6, caractérisé en ce que la couche d'échangeur d'anions sous la forme hydroxyle est faiblement, moyennement ou fortement basique, le rapport volumique et/ou pondéral de la couche d'échangeur d'anions sous la forme hydroxyle moyennement ou fortement basique à la ou les autres couches d'échangeur d'anions fortement basiques sous la forme chlorure et/ou sulfate étant de
0,05:1 à 0,8:1, de préférence de
0,1 :1 à 0,6:1,
ou le rapport volumique et/ou le rapport pondéral, lors de l'emploi d'une ou de couches d'échangeur d'anions faiblement basiques sous la forme hydroxyle à la ou aux couches d'échangeur d'anions fortement basiques sous la forme chlorure et/ou sulfate, se situant entre
0,3:1 et 0,9:1, de préférence
entre
0,4:1 et 0,7:1.

8. Dispositif échangeur d'ions selon une ou plusieurs des revendications 1 à 7, caractérisé en ce que le bac échangeur d'ions cylindrique ou semblable à un cylindre comporte un filetage, un dispositif de jonction ou à emboîtement ou un dispositif de fixation, d'arrêt ou d'insertion analogue et possède un diamètre de
0,5 à 25 cm, de préférence de
0,7 à 18 cm
ainsi qu'une hauteur (ou longueur) de
4 à 25 cm, de préférence de
5 à 20 cm,
la hauteur (respectivement la longueur) du dispostif étant de préférence supérieure au rayon ou au diamètre moyen.

9. Dispositif échangeur d'ions selon une ou plusieurs des revendications 1 à 8, caractérisé en ce que la matière synthétique en particules fines possède un diamètre moyen de particule de
0,01 à 100 µm, de préférence de
0,1 à 30 µm.

10. Procédé pour la fabrication d'un dispositif échangeur d'ions destiné à l'épuration de l'eau ou à l'amélioration de la qualité de l'eau, de préférence à la réduction de la teneur en nitrite et/ou en nitrate, constitué par au moins un bac échangeur comportant à l'intérieur un échangeur d'anions basique sous la forme chlorure et/ou sulfate, caractérisé en ce que, dans le bac échangeur d'ions qui est de préférence un récipient cylindrique, tronconique ou de section elliptique, on introduit en outre une couche d'échangeur d'anions basique sous la forme hydroxyle ou en tant que couche porteuse de groupes hydroxyles, que les couches d'échangeur d'anions sont montées en série, directement pour éviter des mélanges de couches et/ou avec intercalation de couches intermédiaires, de couches filtrantes ou de bacs échangeurs d'anions pour éviter des mélanges de couches et que la ou les couches d'échangeur d'anions sous la forme chlorure et/ou sulfate ne sont pas disposées sous forme de mélange mais sous forme d'une ou de couches séparées.

11. Procédé selon la revendication 10, caractérisé en ce que, par rapport au sens d'écoulement de l'eau à épurer, on introduit tout d'abord à l'orifice ou au voisinage de l'orifice d'admission une couche de charbon actif ou une couche contenant du charbon actif, de préférence une couche de charbon actif contenant une matière synthétique en particules fines, puis directement ou avec intercalation de couches intermédiaires, de couches filtrantes ou de bacs échangeurs d'anions, la ou les couches d'échangeur d'anions contenant des ions chlorure et/ou sulfate ou une couche d'échangeur d'anions sous la forme chlorure et/ou sulfate, ensuite directement ou avec intercalation de couches intermédiaires, de couches filtrantes ou de bacs échangeurs d'anions, la couche d'échangeur d'anions sous la forme hydroxyle ou la couche d'échangeur d'anions porteuse de groupes hydroxyles, l'introduction des couches ayant lieu de préférence dans cet ordre ou dans l'ordre inverse.

12. Procédé selon les revendications 10 et 11, caracterisé en ce qu'au moins une masse d'échangeur d'anions, de préférence la masse d'échangeur d'anions basique porteuse de groupes hydroxyles et/ou la masse d'échangeur d'anions basique contenant des groupes sulfate est introduite séparément, à l'état humecté ou humide en formant des couches, dans le bac d'échange d'ions ou qu'au moins une masse d'échangeur d'anions est humectée après l'introduction stratiforme séparée et que par la suite l'autre ou les autres masses d'échangeur d'anions sont introduites séparément en formant des couches.

13. Procédé selon une ou plusieurs des revendications 10 à 12, caractérisé en ce que le dispositif échangeur d'ions est constitué par au moins deux bacs d'échangeur d'ions qui sont montés en série et que les couches d'échangeur d'anions basiques sous la forme hydroxyle ou la couche d'échangeur d'anions basique contenant des groupes hydroxyles est (sont) introduite(s) dans les derniers dispositifs échangeurs d'ions (par rapport au sens d'écoulement de l'eau à épurer), alors que la masse d'échangeur d'anions basique sous la forme chlorure et/ou sulfate est placée dans au moins un dispositif échangeur d'anions préalablement intercalé dans l'ordre, de préférence dans au moins un dispositif échangeur d'anions directement placé en amont.

14. Procédé selon une ou plusieurs des revendications 10 à 13, caractérisé en ce que l'humectage ou l'imprégnation de la masse d'échangeur d'anions avant chargement dans le bac échangeur d'ions s'effectue avec un liquide stérile ou distillé et/ou stérilisé, de préférence avec de l'eau stérile ou distillée.

15. Procédé selon une ou plusieurs des revendications 10 à 14, caractérisé en ce que la régénération de la masse d'échangeur d'anions sous la forme hydroxyle ou de la couche ou du bac d'échangeur d'anions contenant des groupes hydroxyles a lieu séparément de la régénération des couches ou bacs d'échangeur d'anions basiques sous la forme chlorure et/ou sulfate, moyennant quoi la solution de régénération contenant du nitrite et/ou du nitrate est débarrassée du nitrite et/ou du nitrate par voie chimique ou électrochimique, de préférence par oxydation en azote et est réutilisée.

16. Utilisation du dispositif échangeur d'ions selon une ou plusieurs des revendications 1 à 15 sous forme de cartouches pouvant être posées, vissées, emboîtées ou fixées sous une autre forme ou sous forme de bacs cylindriques, tronconiques ou de section elliptique analogues, renfermant au moins une couche d'échangeur d'anions contenant des ions chlorure et/ou sulfate ou une couche d'échangeur d'anions sous la forme chlorure ou sulfate disposée en couches dans le dispositif échangeur d'ions au voisinage ou au-dessous de l'orifice d'admission, de préférence au-dessous d'une couche filtrante et/ou (dans le sens d'écoulement de l'eau à épurer) avant une couche d'échangeur d'anions sous la forme hydroxyle ou une couche d'échangeur d'anions porteuse de groupes hydroxyles pour l'élimination ou la réduction du nitrate et/ou du nitrite dans l'eau en vue de l'obtention d'eau potable.
